# EUROPEAN PATENT APPLICATION

(11) **EP 2 455 215 A1**
(43) Date of publication of application: **23.05.2012**
(21) Application number: 11189227.9
(22) Date of filing: 15.11.2011
(51) Int. Cl.: B29D 30/00, B29D 30/06, B29C 71/02

(54) **Apparatus and method for shock cooling of a cured pneumatic tire**

(30) Priority: 19.11.2010 US 949929
(71) Applicant: The Goodyear Tire & Rubber Company, Akron, OH 44316-0001 (US)
(72) Inventor: Feller, Jean-Marie, B-6780 Messancy (BE); Griffoin, Jean-Claude Patrice Philippe, L-9170 Mertzig (LU); Mary, Pierre Arsene, B-6700 Arlon (BE); Ilic, Uros, L-7750 Colmar-Berg (LU)
(74) Representative: Kutsch, Bernd

(57) **Abstract**

A method for shock cooling a vulcanized tire is disclosed. The method comprises the steps of mounting a vulcanized tire (1) on a vulcanized tire holder (3); rotating the vulcanized tire (1) at such a speed as to cause a forced convection of the air outside the tire; removing the air outside the vulcanized tire by causing an air flow different from the forced air convection caused by rotating the vulcanized tire; and, subsequently, submerging the vulcanized tire (1) in a fluid for between 4 and 60 minutes whereby the vulcanized tire reaches a predetermined temperature or less. The respective apparatus comprises a vulcanized-tire holding mechanism (3) for holding a vulcanized tire (1), a tank for holding fluid to shock cool the vulcanized tire, and means for submerging the vulcanized tire (1) in the fluid.

## Description

### Field of Invention

The present invention relates to an apparatus and method for cooling a cured pneumatic tire.

### Background of the Invention

Conventionally, organic fibers of polyester, nylon, or like material are used as carcass members as reinforcing fibers inside a pneumatic tire. In the process of cooling a tire after completing the vulcanization, these reinforcing fibers contract. However, the degree of contraction is not uniform due to disparities, arrangement, molded state, and the like of the members. In the natural cooling by merely leaving exposed the pneumatic tire, the pneumatic tire may be deformed due to differences in the degree of contraction, which makes the pneumatic tire a defective product or deteriorates the uniformity performance of the pneumatic tire.

Accordingly, air is normally filled into the inside of the pneumatic tire by a post cure inflator after the vulcanization is completed, and the pneumatic tire is cooled up to a certain temperature or lower (normally 100°C or lower) at which the contraction of the reinforcing fibers stops while holding the pneumatic tire in a proper shape.

A conventional post cure inflator of the "two-point" type, having two upper and lower positions for cooling a pneumatic tire and moving the pneumatic tire between two handling positions by holding the pneumatic tire and reversing the pneumatic tire has been used as a post cure inflator of this type. Due to shortened cooling times and vulcanization times, conventional post cure inflators have various constructions for shortening the cooling time. One post cure inflator defines a hollow passage in a rim mechanism for holding a bead portion of a pneumatic tire. Cooling air is supplied into, and caused to flow along, the hollow passage with air or atomized water sprayed on the outer surface of the pneumatic tire. Thus, the pneumatic tire is forcibly cooled to complete the cooling within a shorter period of time.

Further, temperature at an upper part of the vulcanized pneumatic tire tends to be higher by being influenced, for example, by a natural convection. One surface of the vulcanized pneumatic tire facing a vulcanizer tends to be higher due to an asymmetric temperature environment around the facility and the peripheral temperatures of the pneumatic tires vary due to an asymmetric specification such as a pattern, construction, and material of the pneumatic tires. Thus, a vulcanized pneumatic tire may not be cooled in a well-balanced manner along vertical and/or circumferential directions. The temperature difference caused by the cooling variation may cause non-uniform properties, such as conicity.

It is also difficult to uniformly cool an entire outer surface of the pneumatic tire, causing temperature irregularity and cooling irregularity along circumferential direction outside the pneumatic tire. Use of a cooling medium, such as cooling air, atomized water, or liquid water may stain the pneumatic tire even if uniform cooling can be achieved. Since a mechanism including a driving source and a pipe for supplying the cooling medium needs to be installed around a cooling apparatus, the cooling apparatus will likely be enlarged and the mechanism will become complicated by such peripheral equipment and the cost of such equipment and installation.

### Summary of the Invention

The invention relates to an apparatus in accordance with claim 1 and to a method in accordance with claim 9.

Dependent claims refer to preferred embodiments of the invention.

In accordance with one aspect of the present invention, an apparatus for shock cooling a vulcanized tire includes a vulcanized-tire holding mechanism for holding a vulcanized tire and a tank for holding fluid to shock cool the vulcanized tire. The vulcanized tire is submerged in the fluid for preferably between 4 and 60 minutes or between 4 and 15 minutes whereby the vulcanized tire reaches a predetermined temperature.

In accordance with an aspect of the present invention, the fluid is preferably water.

In accordance with another aspect of the present invention, the predetermined temperature is preferably 100°C.

In accordance with still another aspect of the present invention, the apparatus may further include a rotating mechanism for, prior to submergence of the vulcanized tire in the tank, rotating the vulcanized tire and an air remover for causing, over a side surface portion of the rotating vulcanized tire, an air flow different from an air flow caused by rotating the vulcanized tire to remove the air present near the side surface portion of the rotating vulcanized tire.

In accordance with yet another aspect of the present invention, the rotating mechanism preferably rotates the vulcanized tire at such a speed via the vulcanized-tire holding mechanism that a forced convection becomes more dominant than a natural convection in an air flow around the vulcanized tire.

In accordance with still another aspect of the present invention, the rotating mechanism may include means for rotating the vulcanized tire at a speed of 100 rpm or faster.

In accordance with yet another aspect of the present invention, the air remover may include a removing member operatively connected to the rotating mechanism.

In accordance with still another aspect of the present invention, the apparatus may further include an air replacing mechanism for replacing inflation air for inflating the vulcanized tire by an inner pressure during rotation of the vulcanized tire.

In accordance with yet another aspect of the present invention, the apparatus may further include a mechanism for rotating the vulcanized tire at such a speed as to cause air outside the vulcanized tire to flow such that a forced convection becomes more dominant than a natural convection.

In accordance with still another aspect of the present invention, a blade member may be so arranged as to satisfy a condition for selectively creating a faster air flow at a desired part of the vulcanized tire than other parts of the vulcanized tire.

A method for shock cooling a vulcanized tire in accordance with the present invention includes the steps of: mounting a vulcanized tire on a vulcanized tire holder; rotating the vulcanized tire at such a speed as to cause a forced convection of the air outside the tire; removing the air outside the vulcanized tire by causing an air flow different from the forced air convection caused by rotating the vulcanized tire; and subsequently, submerging the vulcanized tire in a fluid for between 4 and 60 minutes whereby the vulcanized tire reaches a predetermined temperature.

In accordance with a preferred aspect of the method of the present invention, the air is caused to symmetrically flow by the forced convection in areas at the opposite axial sides with respect to the tire equator outside the vulcanized tire.

In accordance with yet another preferred aspect of the method of the present invention, the air outside the vulcanized tire is caused to flow in such a manner that a forced convection becomes more dominant than a natural convection so that physical property values become symmetric at the opposite axial sides with respect to the equator of the vulcanized tire.

In accordance with still another preferred aspect of the method of the present invention, the value of Gr/Re² is 0.4 or smaller when Gr and Re denote a Grashof number and a Reynolds number used to judge the intensity of the natural convection.

### Brief Description of the Drawings

This and other objects, aspects and features of the invention will be apparent from the following descriptions and accompanying drawings in which:
FIG. 1 is a plan view showing an arrangement layout of a tire vulcanizer and a post cure inflator embodying the present invention;
FIG. 2 is a front view showing the arrangement layout of the tire vulcanizer and the post cure inflator; and
FIG. 3 is a schematic construction diagram in vertical section showing the post cure inflator.
FIG. 4 is a schematic illustration of an example shock cooling cycle in accordance with the present invention compared to a conventional cooling cycle.
FIG. 5 is a schematic illustration of example compound properties of a shock cooling cycle in accordance with the present invention compared to a conventional cooling cycle.
FIG. 6 is a schematic illustration of example rolling resistance properties of a shock cooling cycle in accordance with the present invention compared to a conventional cooling cycle.
FIG. 7 is a schematic illustration of an example shock cooling cycle in accordance with the present invention compared to a conventional cooling cycle.

### Detailed Description of an Example Embodiment of the present Invention

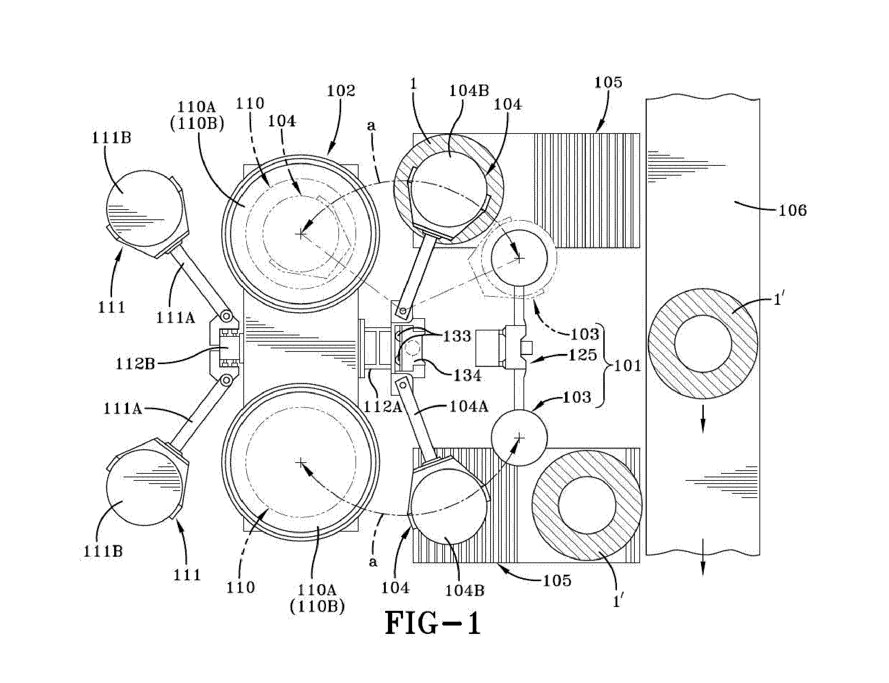

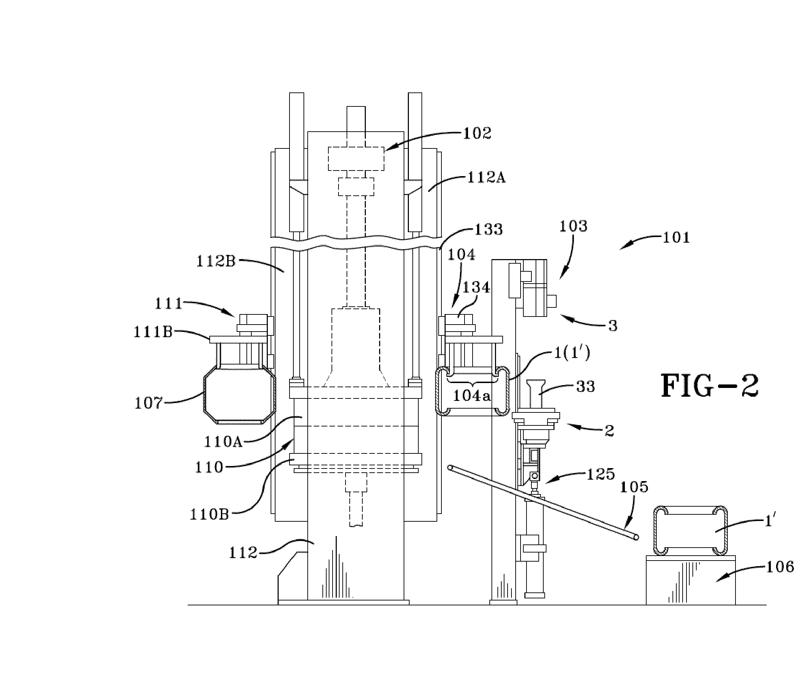

FIGS. 1 & 2 show a conventional post cure inflator (PCI) and a vulcanized tire cooling method for reference to the present invention. A post cure inflator 101 is installed at a specified distance from the rear surface (right side in FIGS. 1 and 2) of a vulcanizer 102. The post cure inflator 101 includes expansion-cooling units 103 for expansion-cooling a tire 1. The number of the expansion-cooling units 103 is set to be equal to the number of molds of the vulcanizer 102. Specifically, the post cure inflator 101 includes two expansion-cooling units 103 arranged in parallel, and a lower rim elevating mechanism 125 for simultaneously elevating lower rim mechanisms 2 of both expansion-cooling units 103, and is so constructed as to be able to simultaneously expansion-cool two vulcanized tires 1 upon simultaneously receiving from the vulcanizer 102.

The vulcanizer 102 may be installed in parallel with the post cure inflator 101 as a tandem type press apparatus for simultaneously vulcanizing two green tires 107 (raw tires). Specifically, the vulcanizer 102 is provided with two molds 110 for vulcanizing the respective green tires 107, two carry-in loaders 111 for carrying the green tires 107 into the respective molds 110 from the front side of the press apparatus, and two rotary loaders 104 for carrying the vulcanized tires 1 out from the respective molds 110 and conveying them to the post cure inflator 101. The vulcanizer 102 may be provided with only one, three or more molds 110. In these cases, the post cure inflator 101 is provided with one, three or more expansion-cooling units 103 corresponding to the number of the molds 110 of the vulcanizer 102.

Each mold 110 includes an upper mold part 110A and a lower mold part 110B relatively movable along vertical direction to close and open the mold 110. The upper mold part 110A is elevated by an elevating cylinder with respect to the lower mold part 110B fixed at a lower part of a vulcanizer frame 112. Each carry-in loader 111 may be provided on a guide column 112B as to move up and down and rotate. The guide column 112B stands at a middle position of the front side (left side in FIGS. 1 and 2) of the vulcanizer frame 112. The green tire 107 may be conveyed to between the respective mold parts 110A, 110B by a rotary movement with an upper bead portion thereof gripped by a tire chuck 111 B at a leading end of a rotary arm 111 A.

The respective rotary loaders 104 are arranged on a rear center frame 112A of the vulcanizer frame 112. Each rotary loader 104 is rotatably mounted while having its axis of rotation located on a guiding mount 134 (supporting portion) for moving a guide rail 133 arranged along the rear center frame 112A, upward and downward. The rotary loaders 104 each may include a rotary arm 104A and a tire chuck 104B. The rotary arm 104A is rotatably supported on the guiding mount 134 and rotates the tire chuck 104B between the vulcanizer 102 and the post cure inflator 101 by a plurality of fluid cylinders (not shown). The tire chuck 104B is constructed by circumferentially arranging three or more claws at even intervals, the claws being simultaneously movable to enlarge or reduce the diameter of the tire chuck 104B. The respective claws are moved to enlarge the diameter of the tire chuck 104B after being inserted into the vulcanized tire 1 or the cooled tire 1' in a diameter reduced state, thereby gripping the upper bead portion of the tire. The tire 1 or 1' is released by moving the respective claws again to reduce the diameter of the tire chuck 104B.

A discharge conveyor 105 is arranged on a rotational path "a" of each rotary arm 104A. The discharge conveyor 105 may be a roller conveyor comprised of a plurality of rollers and located below the rotary loader 104. In addition, the discharge conveyor 105 may be located in proximity to the outer side of the expansion-cooling unit 103, whereby the expansion-cooling unit 103 and the discharge conveyor 105 are arranged side by side facing forward and backward directions. The respective discharge conveyors 105 are inclined downward from the vulcanizer 102 toward a carry-out conveyor 106 so as not to hinder upward and downward movements of the lower rim mechanisms 2, wherein the cooled tires 1' are gravitationally conveyed onto the carry-out conveyor 106. The carry-out conveyor 106 may be a belt conveyor and arranged at a specified distance behind the post cure inflator 101 for conveying the cooled tires 1' transferred from the respective discharge conveyors 105 to a tire checking process as a post process or a shipping site (not shown).

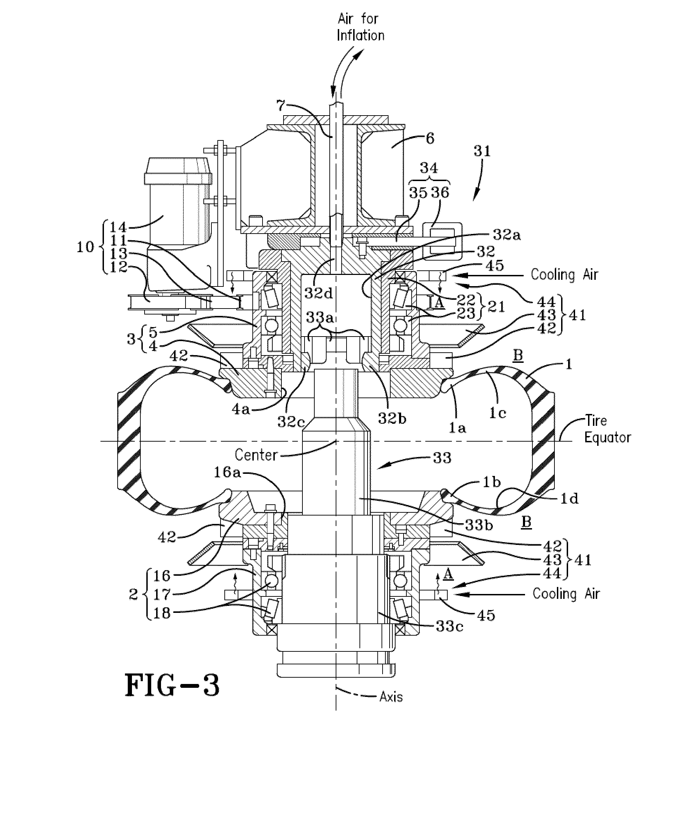

Each expansion-cooling unit 103 of the post cure inflator 101 may include a vulcanized-tire holding mechanism 2 (hereinafter, "lower rim mechanism 2") for holding the lower surface of the horizontally placed vulcanized tire 1 and a vulcanized-tire holding mechanism 3 (hereinafter, "upper rim mechanism 3") for holding the upper surface of the vulcanized tire 1, as shown in FIG. 3. The upper rim mechanism 3 includes an upper rim 4 for hermetically holding an upper bead portion 1 a of the vulcanized tire 1 and an upper rim coupling member 5 associated with the upper rim 4. The vulcanized tire 1 may be formed to have a symmetric shape with respect to an axial center point, and the equator of the vulcanized tire may be defined to be a line of intersection of a plane passing the axial center point and normal to the axial direction and the circumferential surface of the vulcanized tire.

The upper rim 4 has a disk shape with an outer diameter corresponding to the diameter of the upper bead portion 1 a. An opening 4a used to introduce a locking shaft 33 is formed at a radially inner side of the upper rim 4. The upper rim coupling member 5 is secured to the upper surface of the upper rim 4. The upper rim coupling member 5 is formed to have a round tubular shape so as to surround the opening 4a and is arranged such that the center axis thereof coincides with the vertical center axis of the upper rim 4.

The upper rim mechanism 3 is rotatable in an arbitrary direction at an arbitrary speed by a rotating mechanism 10. The rotating mechanism 10 includes a driven pulley 11 horizontally secured to the outer circumferential surface of the rotating mechanism 10, a drive pulley 12 arranged at a side of the driven pulley 11, a drive belt 13 mounted on the driven pulley 11 and the drive pulley 12, and a tire driving motor 14 coupled to the drive pulley 12. The rotating mechanism 10 transmits torque of the tire driving motor 14 to the driven pulley 11 via the drive pulley 12 and the drive belt 13, thereby rotating the upper rim coupling member 5 and the upper rim 4 to rotate the vulcanized tire 1 held by the upper rim 4 at a high speed.

The "high-speed rotation" means the rotation at such a speed that a forced convection becomes more dominant than a natural convection in an air flow around the vulcanized tire 1 (i.e., 100 rpm or faster). The "high-speed rotation" may be sufficient at 100 rpm, but 200-800 rpm may be preferred. The upper limit is set here because the cooling effect (necessary cooling time) does not change very much and a reduction in the durability of the equipment may become an issue if the rotating speed is excessively increased. Further, considerable equipment costs and labor may be necessary to ensure safety. In the case of providing blades, the same effects as those obtained when the rotating speed is 800-1000 rpm may be obtained at a rotating speed of 500 rpm or slower.

The rotating mechanism 10 rotates the vulcanized tire 1 at a high speed such that the forced convection becomes more dominant than the natural convection in the air flow around the vulcanized tire 1, thereby actively removing the heat of the vulcanized tire 1 by the forced convection as well. As a result, the vulcanized tire 1 may be cooled to a specified temperature or lower within a short period of time. Further, by creating the above forced convection as a symmetric air flow at opposite axial sides with respect to the equator of the vulcanized tire 1, the vulcanized tire may be symmetrically cooled at the opposite axial sides with respect to the equator. Qualities after the expansion cooling, particularly uniformity, may thereby be improved. In other words, the post cure inflator is so constructed as to rotate the vulcanized tire 1 at a high speed so that physical property values become symmetric at the opposite axial sides with respect to the equator of the vulcanized tire 1. Thus, the vulcanized tire 1 may be expansion-cooled while the air outside the vulcanized tire flows such that forced convection becomes more dominant than natural convection. The "physical property values" may mean at least one of the physical properties, such as hardness, tensile strength, elongation, pure rubber strength, impact resiliency, tearing strength, compression set, abrasion resistance, flex-crack resistance, and/or in-process extensibility of the carcass cords, but not necessarily all of the physical properties.

As shown in FIG. 3, an upper rim supporting mechanism 21 for rotatably supporting the upper rim mechanism 3 and a locking mechanism 31 for detachably coupling the upper rim mechanism 3 and the lower rim mechanism 2 may be arranged inside the upper rim coupling member 5 of the upper rim mechanism 3. The upper rim supporting mechanism 21 includes a tubular supporting member 22 in the form of a round tube arranged along the inner circumferential surface of the upper rim coupling member 5 and a bearing member 23 arranged between the tubular supporting member 22 and the upper rim coupling member 5. The tubular supporting member 22 has its upper end secured to a horizontal frame 6. The horizontal frame 6 may define a part of a frame mechanism (not shown) for holding the post cure inflator in a specified orientation. The bearing member 23 may couple the tubular supporting member 22 and the upper rim coupling mechanism 5 to fix them vertically and may support them in such a manner as to be horizontally rotatable. Thus, the upper rim supporting mechanism 21 rotatably supports the upper rim mechanism 3 at a specified height by being supported on the horizontal frame 6.

The locking mechanism 31 is provided at the radially inner side of the upper rim supporting mechanism 21. The locking mechanism 31 may include a locking member 32, the locking shaft 33, and a rotary locking mechanism 34. The locking member 32 is rotatably fitted in the tubular supporting member 22 of the upper rim supporting mechanism 21. The leading end of a rotary shaft 35 is rotatably coupled to the upper surface of the locking member 32. The rotary shaft 35 is horizontally placed with a rear end thereof coupled to a cylinder device 36, such as an air cylinder or hydraulic cylinder. The rotary shaft 35 and the cylinder device 36 define the rotary locking mechanism 34, which may rotate the locking member 32 in forward and reverse directions by the cylinder device rotating the rotary shaft.

The locking member 32 may have a recessed portion 32a with an open bottom end. An air hole 32d may be formed in the center of a ceiling surface of the recessed portion 32a and may be connected to an air pipe 7 after vertically penetrating an upper wall portion of the locking member 32. The air pipe 7 may be connected with an air supply (not shown), which may include an air supplying mechanism for supplying air for inflation of the vulcanized tire 1 by an inner pressure and an air replacing mechanism for replacing the air for inflation, for example, during the rotation of the vulcanized tire 1. Latching portions project radially inward from four positions of the side wall surfaces at the bottom end of the recessed portion 32a, and insertion grooves 32c (notches) are formed between adjacent latching portions. The insertion grooves 32c are so formed as to pass projecting portions 33a of the locking shaft 33. The locking mechanism 31 thus constructed brings the projecting portions 33a of the locking shaft 33 and the insertion grooves into alignment with respect to vertical direction by rotating the locking member 32, for example, in forward direction by means of the rotary mechanism 34, whereby the projecting portions 33a of the locking shaft 33 are made free to enter and exit the recessed portion 32a. Also, the locking mechanism 31 brings the projecting portions 33a of the locking shaft 33 and the latching portions 32b into alignment with respect to vertical direction by rotating the locking member 32, for example, in a reverse direction, whereby the projecting portions 33a of the locking shaft 33 may be fixed in the recessed portion 32a.

The above projecting portions 33a are so arranged as to project radially outward at four positions of the upper end of the locking shaft 33. Further, the locking shaft 33 is arranged such that the axis thereof coincides with the center axis of the above lower rim mechanism 2, and includes a shaft portion 33b extending down from the upper end, and a shaft supporting portion 33c formed at the bottom end of the shaft portion 33b. The lower rim mechanism 2 is rotatably mounted on the shaft supporting portion 33c. The lower rim mechanism 2 includes a lower rim 16 for hermetically holding a lower bead portion 1 b of the vulcanized tire 1, a lower rim supporting member 17 coupled to the lower rim 16, and a lower rim coupling mechanism 18 rotatably coupling the lower rim supporting member 17 to the shaft supporting portion 33c of the locking shaft 33.

The lower rim 16 has a disk shape with an outer diameter corresponding to the diameter of the lower bead portion 1 b. An opening 16a used to introduce the aforementioned locking shaft 33 may be formed at a radially inner side of the lower rim 16. A lower rim supporting member 17 is secured to the lower surface of the lower rim 16. The lower rim supporting member 17 forms a round tubular shape so as to surround the opening 16a, and is arranged such that the center axis thereof coincides with that of the lower rim 16. A lower rim coupling mechanism 18, including a bearing portion, may be provided on the inner circumferential surface of the lower rim supporting member 17. The lower rim mechanism 2 thus rotatably supports the vulcanized tire 1 relative to the locking shaft 33 by being driven by the rotation of the upper rim mechanism 3 while securing the lower bead portion 1 b of the vulcanized tire 1.

The bottom end of the locking shaft 33 may be coupled to an elevating mechanism (not shown), which makes the locking shaft 33 movable upward and downward between a tire placing position and a tire mounting position located higher than the shown position. At the tire placing position, the vulcanized tire 1 is attached to, and detached from, the lower rim mechanism 2. Also, at the tire mounting position, the upper bead portion 1 a of the vulcanized tire 1 is held by the upper rim mechanism 3 and cooling is performed while holding the vulcanized tire 1 by the lower and upper rim mechanisms 2, 3.

The cooling may conventionally be performed by an air remover or air removing mechanism 41 in addition to by the rotation of the vulcanized tire 1 by means of the rotating mechanism 10. The air removing mechanism 41 may forcibly remove the air present near side wall portions 1 c, 1 d, which are side surface portions of the vulcanized tire 1, utilizing the rotation by the rotating mechanism 10.

Specifically, the conventional air removing mechanism 41 creates an air flow in directions along the side surface portions 1 c, 1 d of the vulcanized tire 1 and in radial directions by rotating together with the rim mechanisms 2, 3. The air removing mechanism 41 may be provided with a plurality of blade members 42 which are disposed on the respective upper and lower rim mechanisms 3, 2 and to which a torque from the rotating mechanism 10 is transmitted. These blade members 42 may be arranged at even intervals along the circumferential direction of the outer periphery of each of the rim mechanisms 3, 2 (not shown). The blade members 42 may be in the form of plates curved substantially at the same radius of curvature as the outer circumferential surfaces of the respective rim mechanisms 3, 2, and oblique to the radial directions of the rim mechanisms 3, 2. Thus, each blade member 42 may be a so-called sweep-back wing inclined such that a radially inner end is located more upstream than a radially outer end with respect to rotating direction. The conventional air removing mechanism 41 creates the air flow containing components in the directions along the side surface portions of the vulcanized tire 1 and those in radially outward directions without reducing a relative circumferential speed by the rotation of the blade members 42 together with the rim mechanisms 3, 2. The conventional air removing mechanism 41 may have the shape of a multiblade centrifugal fan.

At sides of the upper and lower blade members 42 opposite from the tire 1, partitioning members 43 may be provided as parts of the air removing mechanism 41. The partitioning member 43 may partition areas of the vulcanized tire 1 at the sides of the side wall portions 1 c, 1d into first spatial areas A at air inflow sides toward the blade members 42 and second spatial areas B near the side wall portions 1 c, 1 d of the vulcanized tire 1. Specifically, the partitioning member 43 may be arranged such that the outer periphery thereof at a side toward the blade members 42 (one side) is proximate to the outer peripheries of the blade members 42 and the inner diameter thereof at one side is smaller than the one at the other side. In this way, the partitioning member 43 prevents the air present in the second spatial area B from flowing into the first spatial area A and causes a large quantity of air to flow toward the blade members 42 by collecting the air present in the first spatial area A before a heat exchange.

Part of the torque of the rotating mechanism 10 may be transmitted to the blade members 42 or torque of a driving mechanism (not shown) provided in addition to the rotating mechanism 10 may be transmitted to the blade members 42. Since the phases of the vulcanized tire 1 and the blade members 42 change along rotating direction by the relative rotation, there is an effect of more uniformly removing the air along the circumferential direction of the vulcanized tire 1. In the case of providing the driving mechanism(s) in addition to the rotating mechanism 10 to transmit the torque to the blade members 42, the blade members with torques transmitted from the different driving mechanisms may be provided at the upper and lower sides of the vulcanized tire 1. Alternatively, a driving mechanism (not shown) for transmitting a torque only to the blade members 42 above the vulcanized tire 1 may be provided in addition to the rotating mechanism 10. In this way, the cooling of the vulcanized tire 1 may be adjusted at the upper and lower parts of the vulcanized tire 1. In other words, a more precise adjustment may be made for a temperature difference between the upper and lower parts of the vulcanized tire 1. Accordingly, even if the temperature of the upper part of the vulcanized tire 1 tends to be higher due to the influence of the asymmetry of the temperature around the equipment or the cooling rate is biased due to the asymmetry of the upper and lower parts of the vulcanized tire 1 (e.g., the shapes of the side wall portions 1 c, 1 d differ), the cooling rates of the upper and lower parts may be equalized. The cooling abilities at the upper and lower parts of the vulcanized tire 1 may be individually changed by changing the shape of the blade members 42 provided at the upper side of the vulcanized tire 1 from that of the blade members 42 provided at the lower side or changing the number of the blade members 42 at the upper and lower sides.

At sides of the upper and lower partitioning members 43 opposite from the vulcanized tire 1, cooling air supplying mechanisms 44 may be provided as parts of the air removing mechanisms 41. Each cooling air supplying mechanism 41 may include an annular pipe 45 formed and arranged to surround the upper or lower rim coupling member 5 or 17 of the rim mechanism 3 or 2, a cooling air supplying device (not shown) for supplying the cooling air to the annular pipe 45, and a nozzle (not shown) provided on the annular pipe 45 for jetting out the cooling air toward the blade members 42. The nozzle may be a through hole formed in the annular pipe 45.

As shown in FIGS. 1 and 2, upon the completion of the vulcanization by the vulcanizer 102, the respective rotary loaders 104 may be moved upward and rotated to position the tire chucks 104B within the respective molds 110. Subsequently, the tire chucks 104B may be lowered to grip the vulcanized tire 1. Then, the tire chucks 104B may be moved upward and rotated to convey the vulcanized tires 1 from the respective molds 110 to the respective expansion-cooling units 103 of the post cure inflator 101. At the tire placing positions reached by lowering the lower rim mechanisms 2 to their lower limit positions, the respective loaders 104 may be moved upward and rotated to retract from the corresponding expansion-cooling units 103 after the vulcanized tires 1 are placed on the respective lower rim mechanisms 2 by lowering the respective rotary loaders 104.

When the vulcanized tire 1 is placed on the lower rim mechanisms 2 as stated above, the lower bead portions 1 b of the vulcanized tires 1 are held by the lower rims 16 of the lower rim mechanisms 2, as shown in FIG. 3. Thereafter, the locking shafts 33 may be moved upward, thereby moving the lower rim mechanisms 2 and the vulcanized tire 1 upward. At this time, the locking members 32 may be rotated in a forward direction by the rotating mechanisms 34 of the locking mechanisms 31, whereby the projecting portions 33a of the locking shafts 33 and the insertion grooves 32c of the locking members 32 may be aligned with respect to vertical direction. Accordingly, the locking shafts 33, moving upward, may enter the recessed portions 32a upon the passage of the projecting portions 33a through the insertion grooves 32c. When the locking shafts 33 reach the tire mounting positions at the upper limit positions, the elevation of the locking shafts 33 are stopped and the upper bead portions 1 a of the vulcanized tire 1 are hermetically held by the upper rims 4 of the upper rim mechanisms 3.

Thereafter, the locking members 32 may be rotated in a reverse direction within the locking mechanisms 31, and the latching portions 32b may be aligned with the projecting portions 33a of the locking shafts 33 with respect to vertical direction. Subsequently, the air supplying mechanism of the air supplying device may be operated to supply the air for inflation into the vulcanized tires 1 at a specified pressure via the air pipes 7. As a result, the projecting portions 33a of the locking shafts 33 are fixed with respect to the vertical direction by the latching portions 32b in the recessed portions 32a, whereby the upper rim mechanisms 3 and lower rim mechanisms 2 may be fixed at a specified distance from each other via the locking shafts 33, and the vulcanized tires 1 may be inflated and held in a specified shape.

The air replacing mechanism of the air supplying device may be suitably operated to replace the air for inflation while keeping the pressure in the vulcanized tire 1 at a constant level. As a result, the air for inflation, having reached a high temperature by the heat exchange with the vulcanized tires 1, may be discharged, whereas low-temperature air for inflation before the heat exchange may be supplied into the vulcanized tire 1. Therefore, cooling may be efficiently performed at the inside of the vulcanized tire 1 as well.

Further, tire driving motors 14 may be operated in the rotating mechanisms 10, and the upper rim mechanisms 3 may be rotated via the drive pulleys 12, the drive belts 13, and the driven pulleys 11, thereby rotating the vulcanized tire 1 held by the upper rim mechanisms 3 at a high speed. As a result, forced convection becomes more dominant than natural convection in the air flows around the vulcanized tire 1, whereby the heat quantities of the vulcanized tire 1 may be actively removed by forced convention. In this way, the vulcanized tire 1 may be cooled to a specified temperature or lower within a shorter period of time as compared to a case where the vulcanized tires 1 are expansion-cooled in a stationary state or the vulcanized tires 1 are expansion-cooled while being rotated at a low speed at which natural convection is dominant.

Further, since each vulcanized tire 1 is symmetrically shaped with respect to the axial center position thereof, forced convection created by the high-speed rotation of the vulcanized tire 1 may be air flow symmetric at the opposite axial sides with respect to the equator of the vulcanized tire 1 (i.e., the line of intersection of the plane passing the axial center point and normal to the axial direction and the circumferential surface of the vulcanized tire 1). Thus, the vulcanized tire 1 may be symmetrically cooled at the opposite axial sides with respect to the tire equator, thereby improving the qualities after the expansion cooling, particularly uniformity.

When the respective side wall portions 1 c, 1 d are moved relative to the surrounding air by the rotation of the vulcanized tire 1, an air flow distribution gradually increases as the distance from the outer surfaces increase (i.e., the so-called hydrodynamic boundary layer is created). This hydrodynamic boundary layer becomes thinner by the influence of the air flow induced by the air removing mechanism 41 than when the tire is merely rotated. Similarly, concerning a temperature field, thermal boundary layers present near the side wall portions become thinner. The thinner the boundary layers, the less the heat resistance. Therefore, the side wall portions 1 c, 1 d may be quickly cooled. The vulcanized tire 1 preferably is rotated at such a high speed as to make the hydrodynamic boundary layers sufficiently thin. Specifically, the vulcanized tire 1 may be rotated at 100 rpm or faster, preferably at 200 rpm or faster, and more preferably at 300 rpm or faster. By high speed rotation, the vulcanized tire 1 may be quickly cooled.

Air present near the side wall portions 1 c, 1 d, having reached a high temperature by the heat exchange, may be forcibly removed by the air removing mechanism 41. Specifically, when the cooling is started by the rotation of the vulcanized tire 1, the low-temperature air from the annular pipes 45 of the cooling air supplying mechanisms 44 may be jetted out toward the blade members 42. When the respective rim mechanisms 3, 2 are rotated, the blade members 42 provided in these rim mechanisms 3, 2 are rotated (i.e., turn about the centers of axes of the rim mechanisms 3, 2). As a result, the air before the heat exchange, including the cooling air present in the first spatial areas A of the respective rim mechanisms 3, 2, may be pushed from the partitioning members 43 toward the vulcanized tire 1 by the blade members 42, thereby becoming an air flow containing components in the directions along the side wall portions 1 c, 1 d of the vulcanized tire 1.

Thus, the high-temperature air after the heat exchange present near the side wall portions 1 c, 1 d may be removed from the vulcanized tire 1, and the air before the heat exchange is supplied from the first spatial areas A by the blade members 42 so as to replace the removed air. Accordingly, the side wall portions 1 c, 1 d of the vulcanized tire 1 are cooled to a specified temperature or lower within a short period of time, since heat exchange is constantly performed between the airs having a large temperature difference. In the case of providing the blade members 42, equivalent effects may be obtained at a lower rotating speed or within a shorter period of time as compared to a case where no blade member is provided.

Further, since the second spatial areas B near the side wall portions 1 c, 1 d are partitioned from the first spatial areas A by the partitioning members 43, the high-temperature air in the second spatial areas B, having reached a high temperature by the heat exchange with the vulcanized tire 1, may be hindered from moving toward the first spatial areas A. As a result, only the air before the heat exchange in the first spatial areas A flows toward the blade members 42.

During cooling by the high-speed rotation of the vulcanized tire 1, air in the side wall portions 1 c, 1 d at the upper and lower sides may be caused to flow radially outward of the vulcanized tire 1. This may prevent an occurrence of such a situation where the air, having reached a high temperature by the heat exchange with the lower side wall portion 1 d, may move by the natural convection to the upper side wall portion 1 c. Thus, the upper and lower side wall portions 1 c, 1 d may be cooled equivalently. The air inside the vulcanized tire 1 may be induced to a flow symmetric at the opposite axial sides by a centrifugal force produced by such high-speed rotation, thereby promoting the symmetric (uniform) cooling at the opposite axial sides from the inside of the vulcanized tire 1. In the post cure inflator 101 with the rotating mechanism 10 for rotating the vulcanized tire 1 at a high speed of 100 rpm or faster, cooling in conformity with the shape of the vulcanized tire 1 and uniform cooling from the inside and outside of the vulcanized tire 1 and the adjustment and shortening of the cooling time may be realized by suitably adjusting the rotating speed of the vulcanized tire 1. The presence or absence of the blade members 42, the presence or absence of the relative rotation of the vulcanized tire 1 and the blade members 42, and the rotating speeds of the upper and lower blade members 42 may be adjusted. The post cure inflator 101 may make an adjustment to complete the cooling within one vulcanization cycle by adjusting the rotating speed of the vulcanized tire 1, the presence or absence of the blade members 42, the presence or absence of the relative rotation of the vulcanized tire 1 and the blade members 42, and the rotating speeds of the upper and lower blade members 42.

When the cooling of the vulcanized tires 1 is completed, as stated above, the air for inflation may be discharged and the locking members 32 may be rotated in a forward direction by the rotary mechanisms 34 of the locking mechanisms 31, whereby the projecting portions 33a of the locking shafts 33 and the insertion grooves 32c of the locking members 32 may be aligned with respect to the vertical direction. Thereafter, the locking shafts 33 may be lowered and the projecting portions 33a may be located in the recessed portions 32a. When the cooled vulcanized tire 1 is lowered together with the lower rim mechanisms 2 to the tire placing position, the vulcanized tire 1 may be transported by the rotary loaders 104, as shown in FIGS. 1 and 2, and the cooling of another vulcanized tire 1 may be initiated with no waiting time.

In accordance with the present invention, and as a desirable substitute for and/or supplement to the conventional post cure inflation/cooling process, a vulcanized tire may be cooled more efficiently and at a quicker rate such that final functional properties of the tire, such as rolling resistance and tire uniformity, may be measurably improved, as well as reducing manufacturing (i.e., time), maintenance, and waste cost.

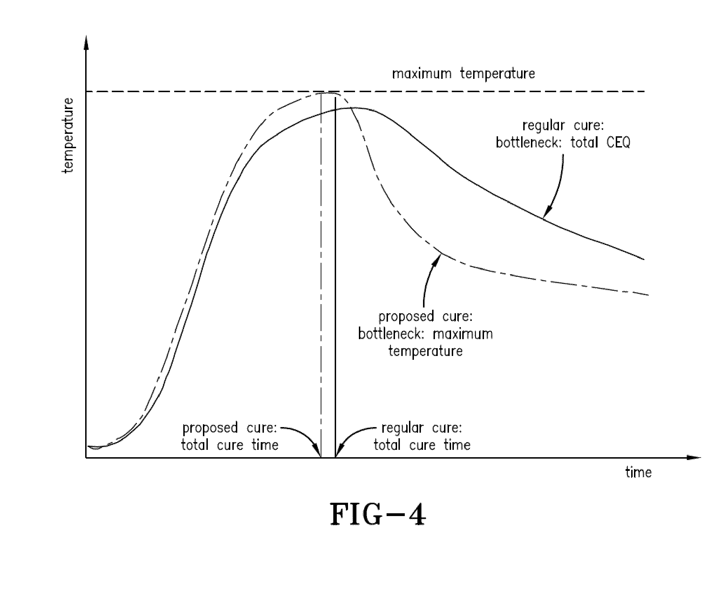

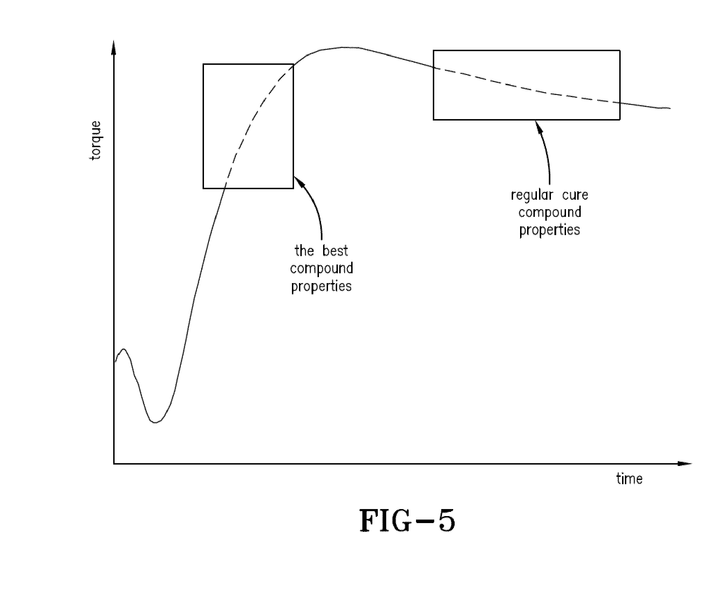

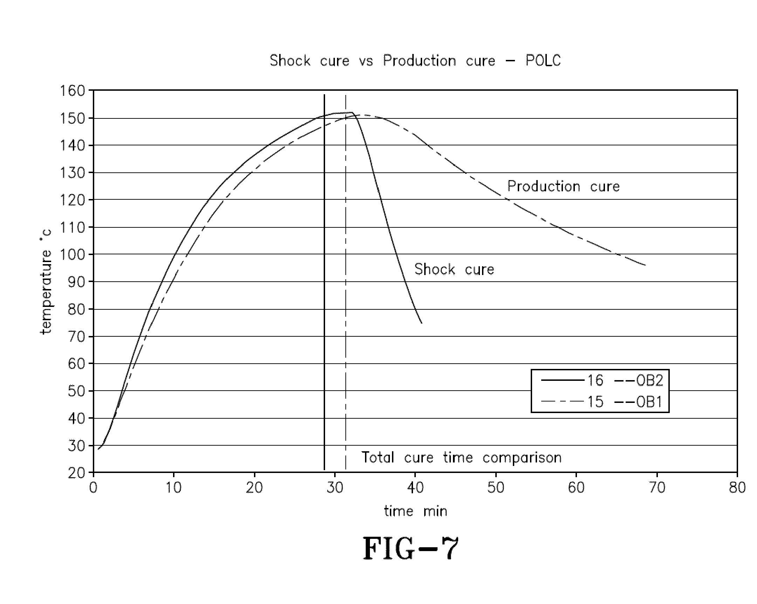

Typically, vulcanized tires may be cooled at ambient temperature flat on a floor or rotated as described above. However, vulcanized tires may be "shock" cooled (i.e., with water or other suitable fluid) for a period (i.e., from 4 to 60 minutes) until the vulcanized tire reaches a predetermined temperature (i.e., 100°C). More specifically, as examples, a vulcanized passenger/motorcycle tire may be submerged in a tank of water from 4 to 6 minutes; a vulcanized farm tire may be submerged in a tank of water from 10 to 30 minutes; a vulcanized truck tire may be submerged in a tank of water from 6 to 20 minutes; and a vulcanized off-the-road tire may be submerged in a tank of water from 30 to 60 minutes. FIGS. 4 & 7 illustrate this shock cooling as well as the desirable ability to shorten the time of the cure cycle by raising the maximum cure temperature (FIG. 4) or by merely lessening time for post cure operations (FIG. 4 & 7), thereby increasing overall tire output. FIG. 5 illustrates how torque response may also be improved through the shock cooling method of the present invention.

The shock cooling of the present invention may also mitigate the typical permanent deformation occurring during initial storage while the tire still has an elevated temperature (i.e., flat spotting, pallet deformation, etc.). Further, since the temperature of the tire is lowered earlier, inspection may occur earlier thereby reducing waste through a quicker response to production of defect tires.

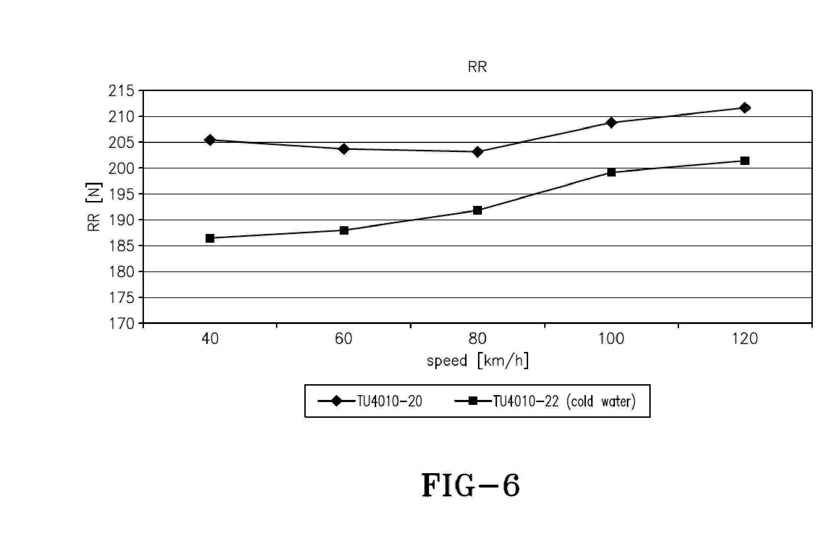

FIG. 6 illustrates the rolling resistance improvement achieved by the shock cooling of the present invention. The lower line of the graph indicates a shock cooled tire and the upper line indicates a conventionally cooled tire.

## Claims

1. An apparatus for shock cooling a vulcanized tire comprising a vulcanized-tire holding mechanism (3) for holding a vulcanized tire (1), a tank for holding fluid to shock cool the vulcanized tire, and means for submerging the vulcanized tire (1) in the fluid.

2. The apparatus as set forth in claim 1 further including a rotating mechanism (10) for, prior to a submergence of the vulcanized tire (1) in the tank, rotating the vulcanized tire (1) and an air remover (41) for causing, over a side surface portion of the rotating vulcanized tire (1), an air flow different from an air flow caused by rotating the vulcanized tire to remove the air present near the side surface portion of the rotating vulcanized tire.

3. The apparatus as set forth in claim 2 wherein the rotating mechanism (10) is designed such that it may rotate the vulcanized tire (1) at such a speed via the vulcanized-tire holding mechanism (3) that a forced convection becomes more dominant than a natural convection in an air flow around the vulcanized tire (1).

4. The apparatus as set forth in claim 2 or 3 wherein the rotating mechanism (10) includes means for rotating the vulcanized tire (1) at a speed of 100 rpm or faster.

5. The apparatus as set forth in claim 2, 3 or 4 wherein the air remover (41) includes a removing member operatively connected to the rotating mechanism (10).

6. The apparatus as set forth in at least one of the previous claims further comprising an air replacing mechanism for replacing inflation air for inflating the vulcanized tire by an inner pressure during rotation of the vulcanized tire.

7. The apparatus as set forth in claim 1 further comprising a mechanism (10) for rotating the vulcanized tire (1) at such a speed as to cause air outside the vulcanized tire (1) to flow such that a forced convection becomes more dominant than a natural convection.

8. The apparatus as set forth in at least one of the previous claims wherein a blade member (42) is so arranged as to satisfy a condition for selectively creating a faster air flow at a desired part of the vulcanized tire (1) than other parts.

9. A method for shock cooling a vulcanized tire, the method comprising the steps of:
mounting a vulcanized tire (1) on a vulcanized tire holder (3);
rotating the vulcanized tire (1) at such a speed as to cause a forced convection of the air outside the tire;
removing the air outside the vulcanized tire by causing an air flow different from the forced air convection caused by rotating the vulcanized tire; and
subsequently submerging the vulcanized tire (1) in a fluid for between 4 and 60 minutes whereby the vulcanized tire reaches a predetermined temperature or less.

10. The method as set forth in claim 9 wherein the fluid is water.

11. The method as set forth in claim 9 or 10 wherein the predetermined temperature is 100°C.

12. The method as set forth in claim 9 wherein the vulcanized tire (1) is rotated at a speed of 100 rpm or faster.

13. The method as set forth in claim 9 wherein the air is caused to symmetrically flow by the forced convection in areas at the opposite axial sides with respect to the tire equator outside the vulcanized tire (1).

14. The method as set forth in claim 9 wherein the air outside the vulcanized tire (1) is caused to flow in such a manner that a forced convection becomes more dominant than a natural convection so that physical property values become symmetric at the opposite axial sides with respect to the equator of the vulcanized tire.

15. The method as set forth in at least one of the claims 9 to 14 wherein the value of Gr/Re² is 0.4 or smaller when Gr and Re denote a Grashof number and a Reynolds number used to judge the intensity of the natural convection.
